# EUROPÄISCHE PATENTSCHRIFT

(11) **EP 0 485 832 B1**
(45) Veröffentlichungstag und Bekanntmachung des Hinweises auf die Patenterteilung: **02.11.1994**
(21) Anmeldenummer: 91118718.5
(22) Anmeldetag: 04.11.1991
(51) Int. Cl.: F21M 3/16, F21M 7/00, F21M 3/20, B60Q 1/00

(54) **Scheinwerfereinheit für Fahrzeuge**
Headlamp unit for vehicles
Ensemble projecteur pour véhicules

(30) Priorität: 13.11.1990 DE 4036031
(43) Veröffentlichungstag der Anmeldung: 20.05.1992
(73) Patentinhaber: Hella KG Hueck & Co., 59552 Lippstadt (DE)
(72) Erfinder: Urbschat, Ulrich, W-4700 Hamm 4 (DE)

(56) Entgegenhaltungen:
- DE-A- 3 703 129
- FR-A- 2 601 111
- FR-A- 2 618 108

## Beschreibung

Die Erfindung bezieht sich auf eine Scheinwerfereinheit für Fahrzeuge mit den Merkmalen nach dem Oberbegriff des Anspruchs 1.

Bei einer solchen, aus der DE-OS 37 03 129 bekannten Scheinwerfereinheit sind an den ersten und zweiten Reflektor Befestigungsstellen angeformt, von denen welche unmittelbar eine starre Verbindung zwischen den sich benachbarten Seiten beider Reflektoren und andere die Verbindung vom ersten und zweiten Reflektor zum Gehäuse hin herstellen. Somit ist jeder Reflektor zugleich Trägerteil des anderen Reflektors. Deshalb und weil der zweite Reflektor zusammen mit dem die Blende und die Linse tragenden Gestell eine schwere optische Einheit bildet, ist es nicht sichergestellt, daß die Reflektoren während des Fahrbetriebs im Gehäuse vibrationsfrei gehalten sind. Außerdem können auf die Schale des Reflektors Verspannungskräfte einwirken. Weiterhin ist es nachteilig, daß die Reflektoren wegen ihren speziell für den Scheinwerfertyp ausgestalteten Befestigungsstellen nicht für andere Scheinwerfereinheiten verwendbar sind. Die beiden Reflektoren sind so zueinander angeordnet, daß die Linse der optischen Einheit und der vordere Rand des ersten Reflektors einen genügend großen bzw. etwa gleich großen Abstand zu der sie gemeinsam abdeckenden Lichtscheibe aufweisen. Bei einer im spitzen Winkel zu den optischen Achsen verlaufenden Lichtscheibe müssen die Befestigungsstellen zwischen den beiden Reflektoren entsprechend anders gestaltet sein.

Aufgabe der Erfindung ist es, die Scheinwerfereinheit nach dem Oberbegriff des Anspruchs 1 derart zu gestalten, daß der erste und zweite Reflektor unabhängig voneinander mit dem Gehäuse verbunden sind, d. h. ein Reflektor nicht gleichzeitig Trägerteil des anderen Reflektors ist, ohne daß sich die Anzahl der Bauelemente erhöht und dabei zwischen der Linse der optischen Einheit und zwischen dem vorderen Rand des ersten Reflektors und der Lichtscheibe ein genügend großer Abstand beibehalten werden kann und weiterhin die Befestigungsstellen der optischen Einheit in einer dem Schwerpunkt der optischen Einheit möglichst nahen Fläche liegen. Diese Aufgabe wird erfindungsgemäß durch die Merkmale des Kennzeichnungsteils des Anspruchs 1 gelöst.

Bei einer derartigen Scheinwerfereinheit, bei welcher die Lampenaufnahme des ersten Reflektors auch gleichzeitig Trägerteil des ersten und zweiten Reflektors ist, kann der erste Reflektor sehr dünnwandig ausgeführt sein und somit ein entsprechend geringes Gewicht aufweisen. Außerdem weisen beide Reflektoren eine sehr genaue Lage zueinander auf, da der erste Reflektor an dem als Aufnahme für die Lampe dienenden Abschnitt des Trägerteils und der zweite Reflektor mit seinem äußeren Randabschnitt an dem Trägerteil befestigt ist. Der äußere Randabschnitt des zweiten Reflektors weist eine sehr genaue Lage zur optischen Achse auf, da er auch zur Befestigung des die Blende und Linse tragenden Gestells dient. Ferner ist es vorteilhaft, daß beim Verstellen der beiden starr miteinander verbundenen Reflektoren keine Verspannungskräfte auf die Reflektoren übertragen werden, welche die Reflexionsfläche des Reflektors so verformen, daß durch sie eine unerwünschte Lichtverteilung entsteht.

Vorteilhafte Weiterbildungen der Erfindung sind in den Ansprüchen 2 bis 21 beschrieben. Gemäß den Ansprüchen 2 bis 7 wird eine Scheinwerfereinheit geschaffen, bei welcher sowohl der erste und zweite Reflektor als auch die Lampe für den ersten Reflektor sehr fest mit dem Trägerteil verbindbar ist. Außerdem ist das Trägerteil sehr einfach im Aufbau und sehr verwindungssteif ausgestaltet. Gemäß dem Anspruch 8 ist für die Lampe des ersten Reflektors durch das Trägerteil eine sehr gute Wärmeableitung gegeben. Mit den vorteilhaften Weiterbildungen gemäß der Ansprüche 9 bis 11 kann die Scheinwerfereinheit vertikal sehr flach bauen. Gemäß den Ansprüchen 12 und 13 ist es möglich, daß die optische Einheit mit ihrer Linse und der erste Reflektor mit seinem äußeren umlaufenden Rand einen wunschgemäßen oder etwa gleich großen Abstand zu der die optische Einheit und den ersten Reflektor gemeinsam abdeckenden Lichtscheibe aufweisen. Gemäß dem Anspruch 14 wird eine Lösung geschaffen, durch welche der zusätzlich verstellbare Reflektor in eine sehr genaue Lage zu dem ihm benachbarten Reflektor einstellbar ist. Mit den vorteilhaften Weiterbildungen gemäß der Ansprüche 15 bis 21 wird eine Scheinwerfereinheit geschaffen, bei welcher der erste Reflektor sehr stabil mit dem Trägerteil verbindbar ist, ohne daß an seiner Reflexionsfläche wegen Materialanhäufung Einfallstellen entstehen müssen. Weiterhin ist der erste Reflektor sehr genau zum als Aufnahmeelement für die Glühlampe dienenden Abschnitt des Trägerteils fixiert.

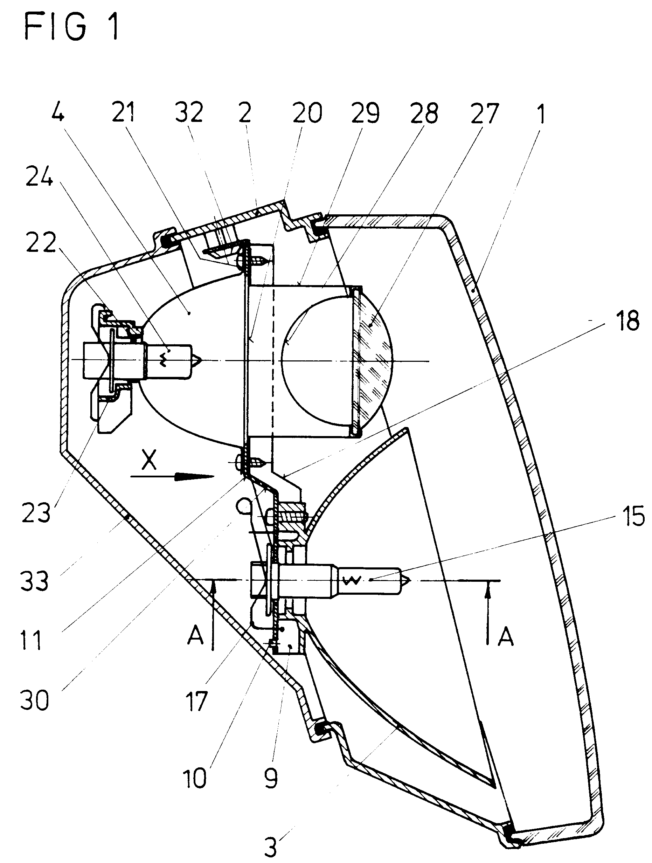

Ein Ausführungsbeispiel der Erfindung ist in der Zeichnung dargestellt, und zwar zeigt
- Figur 1: einen mittleren horizontalen Längsschnitt durch eine Scheinwerfereinheit mit einem paraboloidförmigen ersten und einem ellipsoidförmigen zweiten Reflektor, während

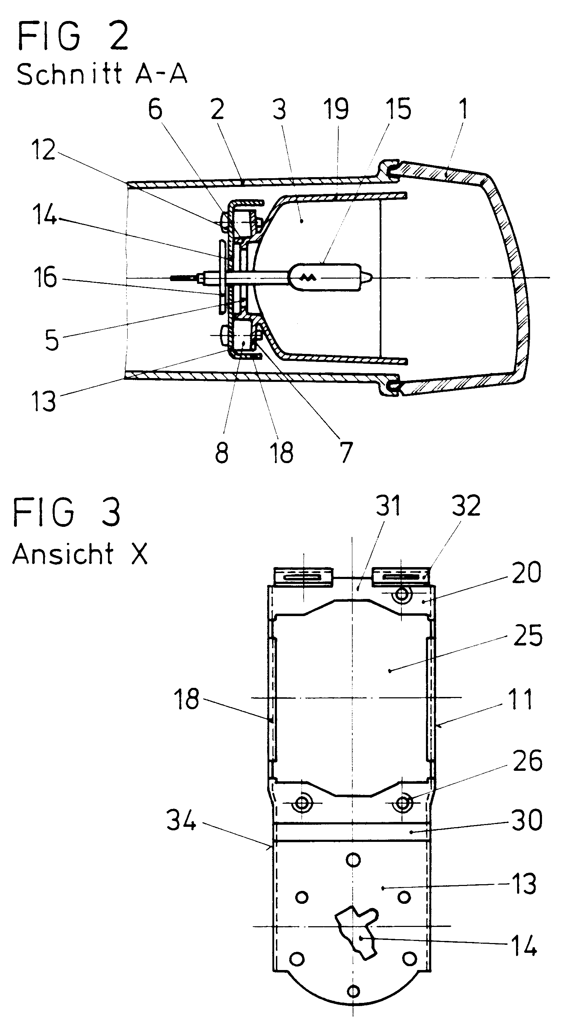

- Figur 2: einen Schnitt nach der Linie A-A durch den ersten Reflektor und
- Figur 3: eine Ansicht in Richtung X auf das den ersten und zweiten Reflektor aufnehmende Trägerteil als Einzelteil darstellen.

In das von der Lichtscheibe (1) abgedeckte Gehäuse (2) ist der paraboloidförmige erste Reflektor (3) und der ellipsoidförmige zweite Reflektor (4) eingesetzt. Der erste Reflektor ist aus Kunststoff hergestellt und weist am Scheitel die öffnung (5) auf, welche von dem nach außen ragenden Kragen (6) umgeben ist. An die äußere Seitenfläche des Kragens (6) ist umlaufend der radial nach außen vorspringende Flansch in einem Abstand zum freien Ende des Kragens (6) angeformt. An die dem ersten Reflektor (3) abgewandte Seitenfläche des Flansches (7) sind auf dem Umfang des Flansches (7) gleichmäßig verteilt als hohle Zapfen ausgebildete Ansätze (8) angeformt, deren Längsachse parallel zur optischen Achse des Reflektors (3) verläuft. Zwischen den hohlen Zapfen (8) sind an die äußere Seitenfläche des Kragens (6) radial nach außen vorspringende Wandungen (9) angeformt, welche weiterhin an dem Flansch (7) angeformt sind und auf der dem Reflektor (3) abgewandten schmalen Seitenfläche die angeformten Erhebungen (10) aufweisen. An der dem Reflektor (3) abgewandten Stirnfläche des Kragens (6) der schmalen Seitenfläche der Wandungen (9) und der Stirnfläche der Zapfen (8) liegt das plattenförmige Trägerteil (11) an. Der Reflektor (3) ist durch die Erhebungen (10) der Wandungen (9), welche in entsprechend große öffnungen des Trägerteils (11) eingreifen, an dem Trägerteil genau fixiert. Der erste Reflektor ist an dem Abschnitt (13) des Trägerteils durch die Befestigungsschrauben (12), welche durch öffnungen des Abschnitts (13) hindurchgehen und in die hohl ausgeführten Zapfen (8) eingreifen, an dem Abschnitt (13) festgesetzt. Der Abschnitt (13) weist die mit der öffnung (5) des ersten Reflektors (3) sich deckende öffnung (14) auf, welche zur Aufnahme der Lampe (15) dient. Die Lampe (15) liegt mit ihrem Sockelteller (16) an der dem Reflektor abgewandten Seitenfläche des Abschnitts (13) des Trägerteils (11) an. Den Sockelteller (16) drückt eine an dem Abschnitt (13) schwenkbar befestigte, bügelförmige Haltefeder (17) gegen den Abschnitt (13). Das Trägerteil ist in seinem Querschnitt U-förmig ausgeführt, wobei die Schenkel (18) in Lichtaustrittsrichtung weisen und der Abstand der Schenkel (18) zueinander etwa so groß ist, wie der Abstand der Abflachungen (19) des in der Lichtaustrittsfläche etwa rechteckigen ersten Reflektors (3). Der neben dem ersten Reflektor angeordnete zweite Reflektor (4) ist an dem sich zu ihm hin erstreckenden Abschnitt (20) des Trägerteils (11) mit seinem äußeren umlaufenden Randabschnitt (21) befestigt. Der zweite Reflektor weist am Scheitel die öffnung (22) und das Aufnahmeelement (23) für die Lampe (24) auf. Das Trägerteil (11) weist eine der Lichtaustrittsfläche des zweiten Reflektor (4) entsprechend große öffnung (25) und an dem die öffnung umgebenden Randabschnitt eingebrachte Befestigungsöffnungen (26) für den zweiten Reflektor (4) auf. Der zweite Reflektor (4) bildet zusammen mit dem die Linse (27) und die Blende (28) tragenden Gestell (29), welches an dem äußeren umlaufenden Randabschnitt (21) des zweiten Reflektors befestigt ist, eine optische Einheit. Die optische Einheit ist in Lichtaustrittsrichtung gesehen wesentlich tiefer gestaltet als der erste Reflektor (3). Aus diesem Grunde und weil die Lichtscheibe (1) von dem ersten Reflektor zur optischen Einheit hin zur Rückseite des Scheinwerfers hin geneigt verläuft, ist zwischen dem ersten Reflektor und dem zweiten Reflektor in das Trägerteil (11) die Stufe (30) eingebracht, damit die Linse der optischen Einheit und der äußere umlaufende Rand des ersten Reflektors etwa einen gleich großen Abstand zu der Lichtscheibe (1) aufweist. In einen der beiden Schenkel (18) des U-förmigen Trägerteils (11) ist eine Befestigungsstelle (nicht dargestellt) eingebracht, welche zur Befestigung des Trägerteils (11) an dem Gehäuse dient. An dem dem zweiten Reflektor nahen Randabschnitt (31) des Trägerteils sind die zwei Laschen (32) mit Befestigungsstellen angeformt, welche zur Befestigung des Trägerteils an dem Gehäuse dienen. Die zwei senkrecht zueinander verlaufenden Achsen, welche durch die Befestigungsstellen hindurchgehen, sind in der Zeichnung nicht dargestellt. Das Gehäuse weist auf seiner Rückseite eine öffnung auf, welche durch die Kappe (33) abgedeckt ist.

## Patentansprüche

1. Scheinwerfereinheit für Fahrzeuge mit folgenden Merkmalen:
- ein schalenförmiger erster und zweiter Reflektor (3) u. (4) sind starr miteinander verbunden und in ein gemeinsames, durch eine Lichtscheibe (1) abgedecktes Gehäuse (2) eingesetzt, mit welchem die Reflektoren (3) u. (4) um mindestens eine Achse verstellbar verbunden sind,
- die Reflektoren (3) u. (4) weisen am Scheitel eine öffnung (5) bzw. (22) auf, an deren Randabschnitt ein Aufnahmeelement (13) bzw. (23) für eine Lampe (15) bzw. (24) befestigt ist,
- der erste Reflektor (3) reflektiert von der Lampe (15) ausgehende Lichtstrahlen etwa parallel, während der zweite Reflektor (4) ellipsoidförmig ausgeführt ist und über ein Gestell (29) mit einer im Strahlengang angeordneten Sammellinse (27) und einer zwischen Reflektor (4) und Sammellinse (27) etwa im Brennpunkt der Sammellinse angeordneten Blende (28) fest zu einer optischen Einheit zusammengebaut ist,
- in Lichtaustrittsrichtung baut die optische Einheit (4, 29, 28, 27) tiefer als der erste Reflektor (3),
dadurch gekennzeichnet, daß
- der zweite Reflektor (4) mit seinem äußeren Randabschnitt (21) an einem separaten Trägerteil (11) befestigt ist, welches sich mit einem Abschnitt (13) bis zum Scheitelbereich des ersten Reflektors (3) hin erstreckt, der zugleich das Aufnahmeelement für die Lampe (15) des ersten Reflektors (3) und das Befestigungselement für den ersten Reflektor (3) ist und um mindestens eine Achse verstellbar mit dem Gehäuse (2) verbunden ist.

2. Scheinwerfereinheit nach Anspruch 1, dadurch gekennzeichnet, daß der zur Aufnahme der Lampe (15) dienende Abschnitt (13) des Trägerteils (11) eine sich mit der öffnung des ersten Reflektors (3) überlappende öffnung (14) aufweist, in welche die Lampe (15) eingesetzt und befestigt ist.

3. Scheinwerfereinheit nach Anspruch 1 oder 2, dadurch gekennzeichnet, daß bei einer einen Sockelteller (16) aufweisenden Lampe (15) für den ersten Reflektor (3) ein Befestigungselement (17) mit dem den ersten Reflektor tragenden Abschnitt (13) verbunden ist, welches den Sockelteller der Lampe (15) gegen die dem Reflektor (3) abgewandte Seitenfläche des Trägerteils (11) drückt.

4. Scheinwerfereinheit nach einem der Ansprüche 1 bis 3, dadurch gekennzeichnet, daß das Trägerteil (11) in dem Abschnitt (20), an welchem der zweite Reflektor (4) befestigt ist, eine öffnung (25) aufweist, an deren Randabschnitt der zweite Reflektor (4) mit seinem äußeren Randabschnitt (21) befestigt ist.

5. Scheinwerfereinheit nach einem der Ansprüche 1 bis 4, dadurch gekennzeichnet, daß das Trägerteil (11) plattenförmig ausgeführt ist.

6. Scheinwerfereinheit nach Anspruch 5, dadurch gekennzeichnet, daß das Trägerteil (11) zumindest abschnittsweise in seinem Querschnitt U-förmig gestaltet ist.

7. Scheinwerfereinheit nach Anspruch 6, dadurch gekennzeichnet, daß die Schenkel (18) in Lichtaustrittsrichtung weisen.

8. Scheinwerfereinheit nach einem der Ansprüche 1 bis 7, dadurch gekennzeichnet, daß das Trägerteil (11) aus Blech hergestellt ist.

9. Scheinwerfereinheit nach einem der Ansprüche 1 bis 8, dadurch gekennzeichnet, daß bei seitlich nebeneinander angeordneten Reflektoren (3 u. 4) das Trägerteil (11) vertikal zumindest nicht wesentlich höher als der erste und/oder zweite Reflektor (3 o. 4) ist.

10. Scheinwerfereinheit nach Anspruch 6, dadurch gekennzeichnet, daß zumindest ein Schenkel (18) des U-förmigen Trägerteils (11) eine Befestigungsstelle (34) für das Trägerteil an dem Gehäuse (2) aufweist.

11. Scheinwerfereinheit nach Anspruch 6, dadurch gekennzeichnet, daß an einem quer zu den Schenkeln (18) des Trägerteils (11) verlaufenden Randabschnitt (31) des Trägerteils mindestens eine Lasche (32) angeformt ist, welche eine oder mehrere Befestigungsstellen für das Trägerteil (11) an dem Gehäuse (2) aufweist.

12. Scheinwerfereinheit nach einem der Ansprüche 1 bis 11, dadurch gekennzeichnet, daß in das Trägerteil (11) zwischen den beiden Reflektoren (3 u. 4) eine Stufe (30) eingebracht ist, wobei die die Reflektoren (3 u. 4) tragenden Abschnitte (13 u. 20) des Trägerteils (11) die Trittflächen der Stufe (30) sind.

13. Scheinwerfereinheit nach Anspruch 12, dadurch gekennzeichnet, daß die Stufe (30) in dem Trägerteil (11) entweder in Lichtaustrittsrichtung oder entgegen der Lichtaustrittsrichtung gerichtet ist.

14. Scheinwerfereinheit nach einem der Ansprüche 1 bis 13, dadurch gekennzeichnet, daß einer der Reflektoren (3 o. 4) um mindestens eine Achse verstellbar mit dem Trägerteil (11) verbunden ist.

15. Scheinwerfereinheit nach einem der Ansprüche 1 bis 14, daß die öffnung (5) des ersten Reflektors (3) von einem Kragen (6) umgeben ist, mit welchem der erste Reflektor (3) an dem Trägerteil (11) befestigt ist.

16. Scheinwerfereinheit nach Anspruch 15, dadurch gekennzeichnet, daß an die äußere Seitenfläche des Kragens (6) Ansätze (8) angeformt sind, welche zur Befestigung des ersten Reflektors (3) an dem Trägerteil (11) dienen.

17. Scheinwerfereinheit nach Anspruch 15 oder 16, dadurch gekennzeichnet, daß die Befestigungsstellen von einem an die äußere Seitenfläche des Kragens (6) umlaufend angeformten und radial nach außen vorspringenden Flansch (7) getragen sind.

18. Scheinwerfereinheit nach Anspruch 16 und 17, dadurch gekennzeichnet, daß die Ansätze (8) an die dem ersten Reflektor abgewandte Seitenfläche des Flansches (7) angeformt sind.

19. Scheinwerfereinheit nach Anspruch 16 bis 18, dadurch gekennzeichnet, daß die Ansätze (8) von hohl ausgeführten Zapfen gebildet sind, in welche die den ersten Reflektor (3) an dem Trägerteil (11) festsetzende Befestigungsmittel (12) eingreifen.

20. Scheinwerfereinheit nach Anspruch 19, dadurch gekennzeichnet, daß die Befestigungsmittel (12) Schrauben sind.

21. Scheinwerfereinheit nach einem der Ansprüche 15 bis 20, dadurch gekennzeichnet, daß an die äußere Seitenfläche des Kragens (6) radial nach außen vorspringende Wandungen (9) angeformt sind, welche auf der dem ersten Reflektor (3) abgewandten schmalen Seitenfläche Erhebungen (10) aufweisen, welche in entsprechend große öffnungen des Trägerteils (11) eingreifen.

## Claims

1. A headlamp unit for vehicles, with the following features:
- dish-shaped first and second reflectors (3) and (4) are rigidly attached to each other and are inserted in a common housing (2), which is covered by a headlamp lens (1) and to which the reflectors (3) and (4) are attached to that they can be adjusted about at least one axis,
- the reflectors (3) and (4) have an opening (5; 22) at their vertices, to the edge section of which opening a receiver element (13; 23) for a bulb (15; 24) is attached,
- the first reflector (3) effects approximately parallel reflection of light rays emerging from the bulb (15), whilst the second reflector (4) is of ellipsoidal construction and is rigidly assembled via a mounting (29) to form an optical unit with a convergent lens (27) disposed in the beam path and a screen (28) disposed between the reflector (4) and the convergent lens (27) approximately at the focus of the convergent lens,
- the optical unit (4, 29, 28, 27) is of deeper construction in the direction of emergence of the light than is the first reflector (3),
characterised in that
- the second reflector (4) is fastened at its outer edge section (21) to separate support part (11), a section (13) of which extends as far as the vertex region of the first reflector (3), which section at the same time is the receiver element for the bulb (15) of the first reflector (3) and the fastening element for the first reflector (3) and is attached to the housing (2) so that it can be adjusted about at least one axis.

2. A headlamp unit according to claim 1, characterised in that the section (13) of the support part (11) serving to receive the bulb (15) has an opening (14) which overlaps the opening of the first reflector (3) and in which the bulb (15) is inserted and fastened.

3. A headlamp unit according to claim 1 or 2, characterised in that, when the bulb (15) for the first reflector (3) has a base plate (16), there is a fastening element (17), to which the section (13) supporting the first reflector is attached and which presses the base plate of the bulb (15) against the side face of the support part (11) facing away from the reflector (3).

4. A headlamp unit according to any one of claims 1 to 3, characterised in that the support part (11) has an opening (25) in the section (20) to which the second reflector (4) is fastened, to the edge section of which opening the cuter edge section (21) of the second reflector (4) is fastened.

5. A headlamp unit according to any one of claims 1 to 4, characterised in that the support part (11) is of plate-shaped construction.

6. A headlamp unit according to claim 5, characterised in that the support part (11) is at least regionally of U-shaped form in cross-section.

7. A headlamp unit according to claim 6, characterised in that the limbs (18) point in the direction of light emergence.

8. A headlamp unit according to any one of claims 1 to 7, characterised in that the support part (11) is manufactured from sheet metal.

9. A headlamp unit according to any one of claims 1 to 8, characterised in that when the reflectors (3 and 4) are disposed laterally side by side the support part (11) is at least not substantially vertically higher than the first and/or second reflector (3 or 4).

10. A headlamp unit according to claim 6, characterised in that at least one limb (18) of the U-shaped support part (11) has a mounting point (34) for the support part on the housing (2).

11. A headlamp unit according to claim 6, characterised in that at least one tab (32) is integrally formed on an edge section (31) of the support part running transversely to the limbs (18) of the support part (11), which tab has one or more mounting points for the support part (11) on the housing (2).

12. A headlamp unit according to any one of claims 1 to 11, characterised in that a step (30) is built into the support part (11) between the two reflectors (3 and 4), wherein the sections (13 and 20) of the support part (11) which support the reflectors (3 and 4) are the treads of the step (30).

13. A headlamp unit according to claim 12, characterised in that the step (30) is oriented in the support part (11) either in the direction of light emergence or opposite to the direction of light emergence.

14. A headlamp unit according to any one of claims 1 to 13, characterised in that one of the reflectors (3 or 4) is attached to the support part (11) so that it can be adjusted about at least one axis.

15. A headlamp unit according to any one of claims 1 to 14, characterised in that the opening (5) of the first reflector (3) is surrounded by a collar (6) by means of which the first reflector (3) is fastened to the support part (11).

16. A headlamp unit according to claim 15, characterised in that projections (8) are integrally formed on the outer side face of the collar (6) and serve for fastening the first reflector (3) to the support part (11).

17. A headlamp unit according to claim 15 or 16, characterised in that the fastening points are borne by a flange (7) which is integrally formed on and surrounds the outer side face of the collar (6) and which projects radially outwards.

18. A headlamp unit according to claims 16 and 17, characterised in that the projections (8) are integrally formed on the side face of the flange (7) facing away from the first reflector (3).

19. A headlamp unit according to claims 16 to 18, characterised in that the projections (8) are formed from pegs of hollow construction, in which the fastening means (12) engage which secure the first reflector (3) to the support part (11).

20. A headlamp unit according to claim 19, characterised in that the fastening means (12) are screws.

21. A headlamp unit according to any one of claims 15 to 20, characterised in that walls (9) projecting radially outwards are integrally formed on the outer side face of the collar (6), which walls have elevations (10), which engage in openings of corresponding size in the support part (11), on their narrow side face facing away from the first reflector (3).

## Revendications

1. Unité de phare pour véhicule, comportant les éléments suivants:
- un premier réflecteur et un second réflecteur (3) et (4) en forme de coquille sont reliés rigidement l'un à l'autre et mis en place dans un boîtier commun (2) recouvert par une plaque d'éclairement (1), les réflecteurs (3) et (4) étant reliés au boîtier avec possibilité de réglage autour d'au moins axe,
- les réflecteurs (3) et (4) comportent au sommet une ouverture (5) ou (22), et un élément de réception (13) ou (23) pour une lampe (15) ou (24) est fixé sur la zone de bordure de ladite ouverture,
- le premier réflecteur (3) réfléchit de façon approximativement parallèle les rayons lumineux émis par la lampe (15), tandis que le second réflecteur (4) est réalisé sous forme ellipsoïdale et est assemblé au moyen d'un châssis (29) solidairement en une unité optique comprenant une lentille convergente (27) agencée dans le trajet des rayons, et un diaphragme (28) agencé entre les réflecteurs et la lentille convergente (27) approximativement au foyer de la lentille convergente,
- l'unité optique (4, 29, 28, 27) a une structure plus profonde dans la direction de sortie de lumière que le premier réflecteur (3),
caractérisée en ce que
- le second réflecteur (4) est fixé par sa zone de bordure extérieure (21) sur une pièce de support séparée (11) qui s'étend par un tronçon (13) jusque dans la région du sommet du premier réflecteur (3) ledit tronçon constituant simultanément l'élément de réception pour la lampe (15) du premier réflecteur (3) et l'élément de fixation pour le premier réflecteur (3), et étant relié au boîtier (2) de manière à pouvoir être réglé autour d'au moins un axe.

2. Unité de phare selon la revendication, caractérisée en ce que le tronçon (13) de la pièce de support (11) qui sert de réception pour la lampe (15) comporte une ouverture (14) qui recouvre l'ouverture du premier réflecteur (3), dans laquelle la lampe (15) est mise en place et fixée.

3. Unité de phare selon l'une ou l'autre des revendications 1 et 2, caractérisée en ce que, lorsqu'il est prévu pour le premier réflecteur (3) une lampe (15) qui comporte une plaque d'embase (16), un élément de fixation est relié au tronçon (13) qui porte le premier réflecteur, ledit élément de fixation repoussant la plaque d'embase de la lampe (15) contre la surface latérale de la pièce de support (11) détournée du réflecteur (3).

4. Unité de phare selon l'une quelconque des revendications 1 à 3, caractérisée en ce que la pièce de support (11) comporte, dans le tronçon (20) sur lequel est fixé le second réflecteur (4), une ouverture (25), le second réflecteur (4) étant fixé par sa zone de bordure extérieure (21) sur la zone de bordure de ladite ouverture (25).

5. Unité de phare selon l'une quelconque des revendications 1 à 4, caractérisée en ce que la pièce de support (11) est réalisée sous la forme d'une plaque.

6. Unité de phare selon la revendication 5, caractérisée en ce que la pièce de support (11) est réalisée, au moins partiellement, avec une section en forme de U.

7. Unité de phare selon la revendication 6, caractérisée en ce que les bras (18) sont dirigés dans la direction de la lumière.

8. Unité de phare selon l'une quelconque des revendications 1 à 7, caractérisée en ce que la pièce de support (11) est réalisée en tôle.

9. Unité de phare selon l'une quelconque des revendications 1 à 8, caractérisée en ce que lorsque les réflecteurs (3) et (4) sont agencés latéralement l'un à côté de l'autre, la pièce de support (11) n'est verticalement pas sensiblement plus haut que le premier et/ou le second réflecteur (3) ou (4).

10. Unité de phare selon la revendication 6, caractérisée en ce qu'un bras au moins (18) de la pièce de support en forme de U (11) comporte un emplacement de fixation (34) pour la pièce de support sur le boîtier (2).

11. Unité de phare selon la revendication 6, caractérisée en ce qu'au moins une patte (32) est formée sur une zone de bordure (31) de la pièce de support qui s'étend perpendiculairement aux bras (18) de la pièce de support (11), ladite patte comportant un ou plusieurs emplacements de fixation pour la pièce de support (11) sur le boîtier (2).

12. Unité de phare selon l'une quelconque des revendications 1 à 11, caractérisée en ce qu'un gradin (30) est ménagé dans la pièce de support (11) entre les deux réflecteurs (3) et (4), les tronçons (13) et (20) de la pièce de support (11) qui portent les réflecteurs (3) et (4) étant les surfaces d'appui du gradin (30).

13. Unité de phare selon la revendication 12, caractérisé en ce que le gradin (30) dans la pièce de support (11) est dirigé soit dans la direction de sortie de la lumière, soit dans le sens contraire à la direction de sortie de la lumière.

14. Unité de phare selon l'une quelconque des revendications 1 à 13, caractérisée en ce que l'un des réflecteurs (3) ou (4) est relié à la pièce de support (11) de manière à pouvoir être réglé autour d'au moins un axe.

15. Unité de phare selon l'une quelconque des revendications 1 à 14, caractérisée en ce que l'ouverture (5) du premier réflecteur (3) est entourée d'une collerette (6) au moyen de laquelle le premier réflecteur (3) est fixé sur la pièce de support (11).

16. Unité de phare selon la revendication 15, caractérisée en ce que des talons (8) sont formés sur la surface latérale extérieure de la collerette (6), lesdits talons servant à la fixation du premier réflecteur (3) sur la pièce de support (11).

17. Unité de phare selon l'une ou l'autre des revendications 15 et 16, caractérisée en ce que les emplacements de fixation sont portés par une bride (7) formée à la périphérie sur la surface latérale extérieure de la collerette (6), et en saillie radialement vers l'extérieur.

18. Unité de phare selon les revendications 16 et 17, caractérisée en ce que les talons (8) sont formés sur la surface latérale de la bride (7) détournée du premier réflecteur.

19. Unité de phare selon les revendications 16 à 18, caractérisée en ce que les talons (8) sont formés par des tétons creux, dans lesquels s'engagent des moyens de fixation (12) qui fixent le premier réflecteur (3) contre la pièce de support (11).

20. Unité de phare selon la revendication 19, caractérisée en ce que les moyens de fixation (12) sont des vis.

21. Unité de phare selon l'une quelconque des revendications 15 à 20, caractérisée en ce que des parois (9) sont formées en saillie radialement vers l'extérieur sur la surface latérale extérieure de la collerette (6), lesdites parois comportant des bossages (10) sur la surface latérale étroite détournée du premier réflecteur (3), lesdits bossages s'engageant dans des ouvertures de taille correspondante de la pièce de support (11).
